(19) Europäisches Patentamt
European Patent Office
Office européen des brevets

(11) **EP 2 567 223 B1**

(12) **EUROPÄISCHE PATENTSCHRIFT**

(45) Veröffentlichungstag und Bekanntmachung des Hinweises auf die Patenterteilung:
**11.06.2014 Patentblatt 2014/24**

(21) Anmeldenummer: **12729156.5**

(22) Anmeldetag: **26.06.2012**

(51) Int Cl.:
*G01N 27/02* *(2006.01)*    *G01N 27/04* *(2006.01)*
*G01N 27/06* *(2006.01)*    *G01R 27/22* *(2006.01)*
*H02M 7/42* *(2006.01)*

(86) Internationale Anmeldenummer:
**PCT/EP2012/062278**

(87) Internationale Veröffentlichungsnummer:
**WO 2013/010753 (24.01.2013 Gazette 2013/04)**

(54) **VORRICHTUNG ZUR MESSUNG DER ELEKTRISCHEN LEITFÄHIGKEIT EINES FLÜSSIGEN MEDIUMS**

APPARATUS FOR MEASURING THE ELECTRICAL CONDUCTIVITY OF A LIQUID MEDIUM

DISPOSITIF DE MESURE DE LA CONDUCTIBILITÉ ÉLECTRIQUE D'UN MILIEU LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2011 DE 102011052005**

(43) Veröffentlichungstag der Anmeldung:
**13.03.2013 Patentblatt 2013/11**

(73) Patentinhaber: **Optek-Danulat GmbH
45356 Essen (DE)**

(72) Erfinder:
• **PLATTE, Daniel
42555 Velbert (DE)**
• **POHL, Alfred
45355 Essen (DE)**

(74) Vertreter: **Schweiger, Johannes et al
Patentanwälte
Becker & Müller
Turmstrasse 22
40878 Ratingen (DE)**

(56) Entgegenhaltungen:
WO-A1-2008/025775    DE-A1- 4 216 176
DE-A1- 19 946 315    DE-A1-102008 024 972

• Jumo Gmbh: "JUMO tecLine Lf-4P Konduktive 4-Elektroden Leitfähigkeitsmesszellen", , 29. September 2009 (2009-09-29), XP55035854, Fulda, Germany Gefunden im Internet: URL:http://www.jumo.be/media/PDFs/Support_ Download/product_archive/t20.2930de.pdf [gefunden am 2012-08-20]

**Beschreibung**

Die vorliegende Erfindung betrifft eine Vorrichtung zur Messung der elektrischen Leitfähigkeit eines flüssigen, insbesondere wässrigen Mediums nach dem Oberbegriff des Hauptanspruchs. Derartige Leitfähigkeitsmessvorrichtungen sind in verschiedenen Schaltungstopologien aus dem Stand der Technik seit längerem bekannt und werden für verschiedenste Anwendungen eingesetzt. Dabei ist etwa die industrielle Prozesstechnik bedeutsam, bei welcher die Leitfähigkeit von Fluiden geprüft wird, um etwa, bei Chromatographie-Prozessen oder dergleichen, die Konzentration gelöster Salze festzustellen. Typische spezifische Leitfähigkeiten im Bereich zwischen ca. 50 mS/cm und 200 mS/cm sind hier zu detektieren. Im Gebiet der Steuerung und Überwachung von Ultrafiltrationsprozessen ist dagegen etwa ein Bereich zwischen 5 $\mu$S/cm und 100 $\mu$S/cm besonders relevant.

Ein weiteres, bedeutsames Anwendungsgebiet ist die Reinigung von Prozessanlagen (genauer: die Überwachung der Spül- bzw. Reinigungsprozesse), wobei derartige Anlagen typischerweise mit hochreinem, deionisiertem Wasser gespült werden und die Leitfähigkeit dieses Spülwassers dann ein Indikator für das Erreichen eines gewünschten Reinigungszustandes ist. Hier zu erfassende Leitfähigkeiten sind deutlich geringer, liegen typischerweise unter 10 $\mu$mS/cm, wobei gewisse Anforderungen Messfehler bzw. Toleranzen kleiner 0,5 $\mu$mS/cm erfordern. Soll etwa, in einem solchen Reinigungskontext, nicht nur das Spülwasser, sondern etwa auch zusätzlich eine Reinigungslösung überwacht werden (typischerweise etwa erwärmtes NaOH, mit Leitfähigkeiten von mehreren 100 mS/cm), besteht etwa bei hierfür geeigneten Leitfähigkeitsmessvorrichtungen der Bedarf nach Systemen, welche einen großen Wertebereich zu erfassender Leitfähigkeiten der relevanten Flüssigkeiten überstreichen.

Beispielsweise WO 2008 025 775 offenbart eine Leitfähigkeitsmessvorrichtung für flüssige Medien mit zwei Elektrodenpaaren.

Aus dem Stand der Technik sind ferner verschiedene Messprinzipien zur Leitfähigkeitsmessung in wässrigen Medien bekannt. So sind etwa zur Erfassung höherer Leitfähigkeitsbereiche induktive Messverfahren üblich, bei welchen kein (galvanischer) Kontakt einer Messelektronik mit dem zu prüfenden Medium besteht. Insbesondere jedoch bei Anwendungen der vorbeschriebenen Art, bei welchen etwa Reinstwasser im Mikrosiemens-Bereich zu überwachen ist, bedarf es kontaktierender Messverfahren, typischerweise realisiert durch das Einleiten und nachfolgende Messen eines Messstroms über Elektroden in das Medium.

Aufgrund geringer Leitfähigkeit des Mediums sind selbst bei hohen anliegenden Elektrodenspannungen die effektiven Messströme gering, wobei es zudem als bekannt vorauszusetzen ist, den einzuleitenden Strom als Wechselsignal vorzusehen, um einen Spannungsabfall an den. Elektroden an der Grenzfläche zum wässrigen Medium (bezogen auf den eigentlichen Spannungsabfall im Medium) gering zu halten; auch werden elektrolytische degradierende Einflüsse auf die Elektroden durch ein solches Wechselsignal vermieden.

Aus dem Stand der Technik gilt es dabei als bekannt, bei der sogenannten 2-Pol-Messung dieselben Elektroden (als Elektrodenpaar) sowohl für das Einspeisen des Stroms, als auch für das Messen zu verwenden, wobei etwa bei geringen Leitfähigkeiten und entsprechend optimierter Elektrodengeometrie (typischerweise werden dann großflächige Elektroden mit geringem Abstand eingesetzt) moderate eingeprägte Spannungen bereits gut messbare Ströme ergeben.

Es lässt sich so dann die spezifische Leitfähigkeit (sigma) bestimmen zu:

$$\text{sigma} = G \times k = k \times I/U,$$

wobei die Zellkonstante k in der Dimension Länge$^{-1}$ (typischerweise 1/cm) die besonderen Bedingungen der jeweiligen Messzellenkonfiguration angibt, eingeschlossen Elektrodenparameter und -geometrien.

Bei einer Erweiterung des Messbereichs zu höheren Leitfähigkeiten, z.B. mehreren 100 mS/cm, erhöht sich der Spannungsabfall an den Grenzschichten der Elektroden, gleichzeitig sinkt der Spannungsabfall über das zu messende wässrige Medium. Zur Lösung dieser Probleme ist es als aus dem Stand der Technik bekannt vorauszusetzen, neben einer Erhöhung der Messfrequenz (also etwa einer Umpolungs-Geschwindigkeit des eingeprägten Wechselsignals) die Elektroden für einen eingespeisten Strom von den Messelektroden für das Messen des resultierenden Spannungsabfalls im Medium zu entkoppeln. Dies führt zu dem prinzipiell bekannten. Ansatz der 4-Pol-Anordnung, wobei, in Analogie zur generischen 4-Pol-Widerstandsmesstechnik, über ein erstes Elektrodenpaar ein Messstrom als Anregungsstrom in das wässrige Medium (Elektrolyt) eingeleitet wird und dann über ein zweites, lediglich über das wässrige Medium zusammenwirkende Mess-Elektrodenpaar die Messspannung (Spannungsabfall) erfasst wird. Beide Elektrodenpaare sind damit räumlich voneinander beabstandet und getrennt. Da mess- bzw. auswerteseitig typischerweise ein hoher Innenwiderstand einer nachgeschalteten Detektorelektronik vorliegt, fließen entsprechend im ausgangsseitigen Messkreis geringe Ströme, mit der vorteilhaften Wirkung, dass die Spannungsabfälle an den Grenzflächen des Mess-Elektrodenpaares vernachlässigbar sind. Da primärseitig (d.h. im die Einpräge-Elektroden beschaltenden Stromkreis) ein dort fließender Strom mess- und beherrschbar ist, kommt es auf den primärseitigen Elektroden-Spannungsabfall nicht an.

Während, wie oben beschrieben, die 4-Pol-Technologie zur elektrischen Leitfähigkeitsmessung in wässrigen Medien insbesondere auch für hohe Leitfähigkeitswerte günstig geeignet ist, ist es gleichwohl konventionell aufwändig, diese Technologie so zu implementieren, dass sie einen großen Leitfähigkeitsbereich überstreicht. In der praktischen Realisierung hat es sich nämlich als problematisch herausgestellt, dass die Zellkonstante (k), welche etwa gattungsgemäß anhand von standardisierten Umgebungen bestimmt und kalibriert wird, abhängig von einer tatsächlichen Leitfähigkeit ist. Zusätzlich spielen dabei die Grenzflächen der Elektroden, welche etwa, abhängig von einer jeweiligen Leitfähigkeits-Größenordnung, Stromdichte-Verschiebungen auf den Elektroden bzw. im Elektrolyt bewirken, sowie Wechselstromeffekte eine Rolle, wie etwa parasitäre Kapazitäten (als Belastung der sekundärseitigen Spannungselektroden) oder aber ein Übersprechen, also ein unbeabsichtigtes wechselstrommäßiges Verkoppeln zwischen primärseitigem Anregungskreis und sekundärseitigem Messkreis. Praktisch bedeutsam beeinflussen hier etwa die (häufig langen) Zuleitungen zwischen Elektrode und Messverstärker derartige parasitäre Effekte.

Gelöst werden diese Probleme bei aus dem Stand der Technik vorauszusetzenden Technologien durch auswerteseitige Messverstärker, welche auf verschiedene Mess- und Wertebereiche von zu erfassenden Leitfähigkeiten jeweils spezifisch angepasst sind und geeignet (manuell oder elektronisch) umgeschaltet werden; typische, zu beeinflussende Größen sind dabei jeweilige Frequenzen, Ansteuerströme und Verstärkungsfaktoren eines Messverstärkers. Gerade integrierte Lösungen, etwa Mikrocontroller-Einheiten, stellen komfortable Infrastrukturen zur Verfügung, welche eine mehrstufige. Anpassbarkeit an verschieden Leitfähigkeitsbereiche einfach programmierbar machen.

Eine mit einem solchen technologischen Ansatz verbundene Problematik ist allerdings das notwendige Entstehen von Diskontinuitäten bzw. Sprungstellen an Übergangsstellen derartiger Messbereiche; liegt daher ein jeweils zu messendes wässriges Fluid in einem solchen Übergangsbereich, entstehen potentiell unbrauchbare Messergebnisse. Notwendig ist daher das Realisieren einer Hysterese beim Umschalten, wobei jedoch eine derartige (auch günstig mit Digitalelektronik realisierbare) Hysterese-Lösung wiederum das Problem bringt, dass ein jeweils im Hysterese-Bereich liegender Wert abhängig von der Richtung ist, aus welcher sich der Messwert verändert, so dass ein Hysterese-Abstand bzw. -hub einen potentiellen Messfehler bedeutet.

Gerade die erwähnte Digitalelektronik, bei welcher etwa auch eine digitale Prozessorelektronik ein (rechteckförmiges) primärseitiges Ansteuersignal zum Einprägen in das wässrige Medium erzeugt, bringt weitere, praktisch bedeutsame Probleme. So werden etwa die mit einem Rechteck-Signal verbundenen (harmonischen) Oberwellen der Grundfrequenz besonders stark durch nichtohmsche Störgrößen, etwa die erwähnten parasitären Kapazitäten, beeinflusst. Diesem ist wiederum nur durch eine sinusförmige (zumindest oberwellenarme) primärseitige Ansteuerung zu begegnen, was den Hardware-Aufwand deutlich erhöht.

Schließlich bringt noch die mögliche Variation einer Messfrequenz bei einer als bekannt vorauszusetzenden Bereichsumschaltung (etwa im Rahmen einer integriert-digitalen Lösung) das potentielle Problem einer Mehrdeutigkeit durch parasitäre kapazitive Einflüsse: Wird etwa bei sehr geringen Leitfähigkeiten eine sehr hohe Messfrequenz benutzt, können derartige parasitäre kapazitive Einflüsse eine hohe Leitfähigkeit vortäuschen, mit der unerwünschten Wirkung, dass der sekundärseitige Messverstärker nicht die angemessenen Messbedingungen erkennt und entsprechend nicht eine zugehörige Messbereichsauswahl bzw. -umschaltung vornimmt.

Aufgabe der vorliegenden Erfindung ist es daher, eine gattungsgemäße Vorrichtung zur Messung der elektrischen Leitfähigkeit eines flüssigen, insbesondere wässrigen, Mediums zu schaffen, welche zum Erfassen von elektrischer Leitfähigkeit in einem großen Erfassungsbereich, insbesondere im Bereich zwischen wenigen $\mu$S/cm bis zu mehreren 100 mS/cm, vorgesehen und ausgebildet ist, dabei konstruktiv einfach aufgebaut ist, insbesondere mess- und auswerteseitig eine Mehrzahl diskreter Mess- bzw. Auswertebereiche und/oder diskontinuierliche auswerteseitige Messsignale vermeidet, gleichwohl ein der elektrischen Leitfähigkeit entsprechendes Messsignal hoher Signalgüte und Messgenauigkeit anbietet.

Die Aufgabe wird durch die Vorrichtung zur Messung der elektrischen Leitfähigkeit nach dem Hauptanspruch gelöst; vorteilhafte Weiterbildungen der Erfindung sind in den Unteransprüchen beschrieben. Zusätzlich Schutz im Rahmen der Erfindung wird beansprucht für eine Verwendung einer solchen Vorrichtung zur Leitfähigkeitsmessung von Wasser oder einer wässrigen Lösung, wobei diese Vorrichtung einen ununterbrochenen Leitfähigkeitsbereich zwischen 0,01 mS/cm und 500 mS/cm und darüber hinaus bis über 1 S/cm abdecken und als Hysterese-freies, kontinuierliches Messsignal bereitstellen soll.

In erfindungsgemäß vorteilhafter Weise ist primär-(einpräge-)seitig eine Anordnung aus Konstantspannungs-mitteln, Kommutatormitteln für die erste (Einpräge-) Elektrodenanordnung sowie den ohmschen Widerstandsmitteln als Reihenschaltung in einem (einzelnen) Schaltungszweig ausgebildet, wobei der Einprägestrom als Spannungsabfall über den Widerstandsmitteln (insbesondere einem Teilwiderstand von diesem) abgegriffen werden kann. Damit wird primärseitig die von der Spannungsquelle erzeugte Gleichspannung über die Kommutatormittel als Modulator in getaktetwechselnder Polarität mit der Taktfrequenz an das Einpräge-Elektrodenpaar (als bevorzugte Realisierung der ersten Elektrodenanordnung) angelegt. In Abhängigkeit von der Leitfähigkeit des wässrigen Mediums (bzw. den bevorzugt als konstantem Widerstand ausgebildeten ohmschen Widerstandsmitteln) fließt ein (Einpräge-) Strom, der als Spannungsabfall über den Widerstandsmitteln erfass- und auswertbar ist und in die Bestimmung der elektrischen Leitfähigkeit eingeht. Gleichermaßen erfolgt auswerteseitig eine Demodulation, wobei, phasenrichtig mit den einprägeseitigen Kommutatormitteln in der Taktfrequenz, durch die Erfassungsmittel ein Speicherkondensator geladen wird, dessen Kondensatorspannung als Messsignal abgegriffen, bevorzugt in ein digitales Signal quantifiziert und ebenso zur Bestimmung der elektrischen Leitfähigkeit elektronisch weiterverarbeitet werden kann.

Die erfindungsgemäße Konfiguration, insbesondere der einprägungsseitig ausgebildete Schaltungszweig in Reihenschaltung, ermöglicht vorteilhaft, dass über einen weiten Bereich der elektrischen Leitfähigkeit des wässrigen Mediums - der Anregungsstrom sich in Abhängigkeit von der Leitfähigkeit kontinuierlich ändert, ohne dass erfindungsgemäß weitere aktive Komponenten in diesem Schaltungszweig (außerhalb der Kommutatormittel, welche in ansonsten bekannter Weise etwa mittels Halbleiter-Schaltern oder dergleichen, weiter bevorzugt ohne Nutzung einer integrierten Schaltungseinheit bzw. eines programmierbaren Ausgangs einer solchen Schaltungseinheit, realisiert sind) eingesetzt werden. Entsprechend ermöglicht die Erfindung, dass eine Leitfähigkeitsänderung von z.B. über fünf Zehnerpotenzen eine Änderung des primärseitig im Schaltungszweig fließenden Stroms um etwa einen Faktor 30 (1,5 Zehnerpotenzen) bewirkt, kontinuierlich und ohne Diskontinuitäten. Damit lässt sich dann vorteilhaft der erfindungsgemäß beabsichtigte weite Bereich von im wässrigen Medium zu messender elektrischer Leitfähigkeit überstreichen, ohne dass eine Bereichsauswahl oder -umschaltung notwendig wäre, und wobei zusätzlich vorteilhaft lediglich begrenzte Auflösungen zugeordneter Analog-Digital-(A/D) Wandler notwendig sind, womit dann zusätzlich der hardwaretechnische bzw. apparative Aufwand vermindert werden kann (und zusätzlich entsprechend die Großserientauglichkeit der Erfindung weiter erhöht ist). Am beschriebenen Dimensionierungsbeispiel würde dann für den beschriebenen Bereich bzw. dessen messtechnische Erfassung und Auswertung auf der Einpräge- sowie der Auswerteseite jeweils ein typischer 16 Bit-Wandler mit der zugehörigen Auflösung ausreichen.

Einprägeseitig würde etwa eine solche Analog-Digital-Wandlereinheit das über den Widerstandsmitteln (bzw. dem weiterbildungsgemäß vorgesehenen Teilwiderstand) abgegriffene, zum Einprägestrom im Schaltungszweig proportionale Spannungssignal abwandeln und für die digitale Weiterverarbeitung bereitstellen, ebenso wie auswerteseitig den mit der zweiten Elektrodenanordnung (d.h. den Messelektroden) zusammenwirkenden Kapazitätsmitteln eine Analog-Digital-Wandlereinheit zum Digitalisieren der Kondensatorspannung zugeordnet ist.

Besonders relevant und für die praktische Realisierung vorteilhaft ist die Erfindung, wenn die durch das vorbeschriebene Erfindungsprinzip angebotenen Vereinfachungsvorteile mithilfe von einfachen und kostengünstigen ElektronikBaugruppen realisiert werden. Neben den beschriebenen, potentiell kostengünstigen und als Massenteile erhältlichen A/D-Wandlern bietet sich zu diesem Zweck insbesondere die Implementierung der Auswertemittel mittels geeigneter Mikrocontroller an, wobei etwa das weiterbildungsgemäß separat von einer derartigen Controllereinheit digitalisierte Einpräge- sowie Messsignal die (Hardware-) Anforderungen an eine solche Elektronikkomponente ebenso herabsetzt, wie etwa die weiterbildungsgemäß vorgesehene serielle Ankopplung der einpräge- und/oder messseitig vorgesehenen A/D-Wandlereinheiten; auf diese Weise lässt sich vorteilhaft die Anzahl der Controller-Anschlüsse deutlich reduzieren, wobei gleichermaßen zeitgerecht bzw. synchron die Primär- sowie die Sekundärseite abgefragt sowie dann datenmäßig weiterverarbeitet werden kann.

Insbesondere die weiterbildungsgemäß vorteilhafte Realisierung der Kommutatormittel mithilfe elektronischer Schaltbauelemente, etwa geeigneter (Leistungs) Transistoren, führt zu potentiell störenden höherfrequenten Signalkomponenten im primärseitigen Schaltungszweig, ggf. auch auf der Messseite. Zusätzlich beeinflusst ein Ansteuersignal für die Kommutatormittel (in der Taktfrequenz) dieses Signalbild. Entsprechend ist weiterbildungsgemäß vorgesehen, im primärseitigen Schaltungszweig und/oder auf der Auswerte-/Messseite geeignete Filtermittel vorzusehen, etwa in Form eines Kondensators parallel zum Messwiderstand. Auch ist es weiterbildungsgemäß vorteilhaft und bevorzugt, die in Analog-Digital-Wandlereinheiten häufig integrierten (digitalen) Filtermittel zu benutzen, um (abgestimmt etwa auf die Taktfrequenz des Wechselsignals), einen diesbezüglichen Störeinfluss aus den Messkreisen zu filtern (wobei dies gleichermaßen etwa für Einflüsse einer Netzfrequenz einer vorhandenen Versorgungsspannung oder aber für andere überlagerte Stör-Wechselsignale gilt).

Eine weitere bevorzugte Ausführungsform der Erfindung sieht vor, dass auch (nicht-kapazitive) Entkopplungsmittel, insbesondere ohmsche Widerstände, zwischen den Elektroden der zweiten Elektrodenanordnung und der nachgeschalteten messseitigen Kommutation vorgesehen sind. Diese weiterbildungsgemäße Maßnahme bewirkt, in Abkehr von einer traditionellen Logik, die messseitigen Spannungselektroden widerstandsarm mit dem Messkondensator sowie der nachgeschalteten Quantisierungs- bzw. Auswerteelektronik zu verbinden, dass ein Einfluss der Spannungselektroden (etwa Dicke und Homogenität einer Passivschicht) in Verbindung mit Ladungs- und Potentialeffekten beim Kommutator-Flankenwechsel, das sekundärseitige Messsignal weniger stark beeinflusst.

Eine solche Maßnahme wäre alternativ etwa auch durch eine besonders hochohmige Ausgestaltung des Kommutatoreingangs möglich, die weiterbildungsgemäß vorteilhafte und hardwaretechnisch einfache Lösung mithilfe von diskreten Halbleiter-Bauelementen würde hier jedoch zusätzlichen Aufwand erfordern.

Während es im Rahmen erfindungsgemäßer Realisierungen vorteilhaft und sinnvoll ist, sekundärseitig (d.h. auf der Seite der zweiten Elektrodenanordnung und der zugeordneten Erfassungsmittel) das über den Kondensatormitteln entstehende Spannungssignal mit einem konstanten Verstärkungsfaktor zu verstärken und dann geeignet zu digitalisieren (oder unverstärkt zu digitalisieren), sieht eine erfindungsgemäß vorteilhafte Variante der Erfindung vor, die Kondensatorspannung in Form parallel zueinander vorgesehener Verstärkereinheiten um verschiedene Verstärkungsfaktoren zu verstärken und entsprechend das verstärkte Kondensator-Spannungssignal (simultan) auf verschiedenen Pegeln anzubieten; die Hochohmigkeit hierfür typischerweise verwendeter Operationsverstärker steht dabei einer derartigen parallelen Anordnung von zwei oder mehr Verstärkereinheiten ebenso wenig entgegen, wie etwa, gemäß einer weiteren Variante, einerseits das Kondensator-Spannungssignal unmittelbar digitalisiert wird und dann zur Weiterverarbeitung ebenso kontinuierlich bereitsteht, wie ein vor der Digitalisierung in einem separaten, dezidiert zugeordneten A/D-Wandler um einen vorbestimmten Verstärkungsfaktor verstärktes Kondensator-Spannungssignal.

In der Weiterverarbeitung durch die Auswertemittel ermöglicht dann diese Variante eines simultanen Mehrfach-Messsignals auf verschiedenen Spannungs-(Verstärkungs-) Pegeln, dass größtmögliche Flexibilität in der Auswertung und Weiterverarbeitung des erhaltenen Signals besteht: So würde etwa bei hohen Kondensatorspannungspegeln ein unverstärktes Signal digitalisiert und weiterverarbeitet werden können (wobei etwa ein bei einem derartig hohen Spannungspegel potentiell übersteuernder Verstärker ggf. durch Abregeln in einem hochohmigen und dadurch nicht die Messspannung beeinflussenden Bereich bleibt), während etwa eine niedrigpegelige Kondensatorspannung, welche unverstärkt nur ein stark verrauschtes A/D-Wandlungsergebnis bringen würde, zunächst um den vorbestimmten und bekannten Verstärkungsfaktor angehoben werden kann. In einem möglichen Übergangsbereich lassen sich wiederum die Signal beider Messzweige (da kontinuierlich und parallel anliegend) mit geeigneten Gewichtungen kombinieren bzw. verrechnen.

Wiederum praktisch bedeutsam und vorteilhaft ist der Umstand, dass die primärseitig bzw. sekundärseitig zugeordneten A/D-Wandlereinheiten, weiterbildungsgemäß separiert von einer Mikrocontroller-Steuereinheit, dieselbe Betriebs- bzw. Referenzspannung einer für die Gesamtvorrichtung vorhandenen Versorgungsspannungseinheit erhalten. Vorteilhaft führt dies dazu, dass entsprechende Fehler durch Schwankungen bzw. andere Einflüsse der Referenzspannung sich ausgleichen und das Messergebnis unbeeinflusst lassen. Dies gilt gleichermaßen auch für eine notwendige Quantisierung eines Temperatursignals mittels A/D-Wandler, welcher das analoge Temperatursignal eines Temperatursensors, der dem wässrigen Medium gemäß weiterer vorteilhafter Weiterbildung der Erfindung zugeordnet ist, aufbereitet.

Im Ergebnis ermöglicht es die vorliegende Erfindung in überraschend einfacher, wirksamer und leistungsfähiger Weise, dass ein großer durchgehender Bereich elektrischer Leitfähigkeit eines flüssigen Mediums, typischweise zwischen 1 $\mu$mS/cm und 1000 mS/cm, abgedeckt werden kann, ohne dass aufwändige und fehlerträchtige Bereichs-Umschaltungen notwendig sind, ohne dass erhöhter mess- und auswertungstechnischer Aufwand auf der Sekundärseite erfolgt, und ohne dass elektrolytische und andere, mit den Elektrodenpaaren zusammenhängende Effekte ein Messergebnis signifikant beeinflussen. Dabei ist die 4-Pol-Technologie, bei welcher sowohl die erste, als auch die zweite Elektrodenanordnung jeweils ein Elektrodenpaar aufweisen, bevorzugt, gleichwohl sind Konstellationen denkbar, bei welchen mehr als zwei Elektrodenpaare, einprägeund/oder messseitig, in der Messzelle vorgesehen und in der erfindungsgemäßen Vorrichtung beschaltet sind.

Lösungsgemäß vorteilhaft sind Kabeleinflüsse oder andere, kapazitiv wirksame Faktoren gering, so dass diese - praktisch nützlich - keine nachteiligen Wirkungen ausübt. Ebenso ist ein elektrischer (Gesamt-) Leistungsbedarf der Vorrichtung gering, günstig insbesondere bei weiterbildungsgemäß potentialgetrennter- Stromversorgung, die eine kapazitätsarme Auslegung erleichtert. So kann, bei einer weiterbildungsgemäßen Potentialtrennung, eine Koppelkapazität parallel zur Isolationsbarriere von weniger als 5 pF realisiert werden, was wiederum das Auftreten von Störpotentialen verringert.

Weitere Vorteile, Merkmale und Einzelheiten der Erfindung ergeben sich aus der nachfolgenden Beschreibung von Ausführungsbeispielen sowie anhand der Zeichnungen; diese zeigen in

Fig. 1:     ein schematisches Blockschaltbild zum Verdeutlichen der prinzipiellen Funktionsstruktur der vorliegenden Erfindung;

Fig. 2:     eine Darstellung analog Fig. 1, jedoch mit zusätzlichen, für eine praktische Realisierung vorteilhaften Schaltungskomponenten und Baugruppen, und

Fig. 3:     ein Strom- und Spannungsdiagramm, bezogen auf die elektrische Leitfähigkeit, zum Verdeutlichen einer Leitfähigkeitsabhängigkeit über einen großen Erfassungsbereich.

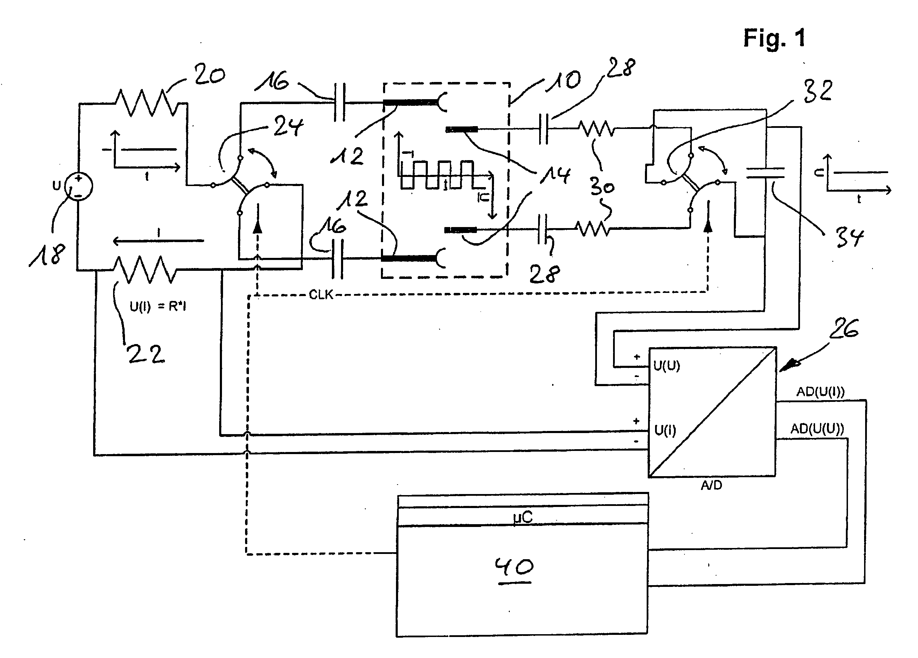

Die Fig. 1 verdeutlicht in der Schemadarstellung die wesentlichen Funktionskomponenten der Vorrichtung zur Messung der elektrischen Leitfähigkeit eines wässrigen Mediums gemäß einer ersten Ausführungsform der vorliegenden Erfindung. So beschreibt das Bezugszeichen 10 eine mit dem flüssigen Medium zu befüllende Messzelle, in welche ein Elektrodenpaar 12 als erste Elektrodenanordnung und ein weiteres Elektrodenpaar 14 als zweite Elektrodenanordnung, voneinander1 entkoppelt, hineinragen, um in der Art einer ansonsten bekannten 4-Pol-Anordnung über die Elektroden 12 eine Einprägung vorzunehmen und mittels der Elektroden 14 dann das Messsignal zu erzeugen. Zum Zweck der weitergehenden Offenbarung, insbesondere im Hinblick auf eine mögliche praktische Realisierung am Ausführungsbeispiel, wird verwiesen auf die in der DE 199 46 315 offenbarte Messzelle, welche ein mögliches Beispiel zur Realisierung der in Fig. 1 dargestellten Zelle 10 zeigt.

Einprägeseitig, d.h. als Schaltungszweig mit dem Elektrodenpaar 12 verbunden (und über das Gleichspannungspotential zu den Elektroden entkoppelnde Koppelkondensatoren 16 angekoppelt), ist eine Konstantspannungsquelle 18, welche über einen ersten Widerstand 20 (als Arbeitswiderstand) und einen zweiten Widerstand 22 (Messwiderstand) mit primärseitigen Kommutatormitteln 24 verbunden ist, welche wiederum, angesteuert durch ein Taktsignal CLK, in der dargestellten Weise aus dem Konstantspannungssignal der Quelle 18 ein Wechselsignal für das Elektrodenpaar 12 mit der Taktfrequenz CLK machen. In jedem Kommutator-Schaltzustand liegt ein einzelner Schaltungszweig auf der Einprägungsseite vor, wobei die Spannungsquelle 18 mit den aus den Widerständen 20, 22 gebildeten Widerstandsmitteln und dem Elektrodenpaar 12 eine Reihenschaltung bildet. Ein in diesem Schaltungszweig fließender Strom I fällt über den Widerstand 22 ab und wird dort als einprägungsseitiges, stromproportionales Einprägesignal U(I) abgegriffen und einer A/D-Wandlereinheit 26 zugeführt.

Messseitig liegt das Potential des Elektrodenpaares 14 (an- bzw. abgekoppelt durch jeweilige Koppelkondensatoren 28 bzw. in Reihe liegende Koppelwiderstände 30) über eine sekundärseitige Kommutatoreinheit 32 über einem Messkondensator 34 an, wobei die Kondensatorspannung U(U) als Messsignal abgegriffen und der A/D-Wandlereinheit 26 anliegt.

Da die sekundärseitige Kommutatoreinheit 32, getaktet mit der Taktfrequenz CLK und synchron zur primärseitigen Einheit 24 betrieben, das in der gezeigten Weise rechteckförmig für das Einprägen modulierte Signal ausgangsseitig demoduliert, liegt damit über dem Messkondensator 34 als Messspannung U(U) eine Kondensator-Gleichspannung.

In der weiteren Verarbeitung als Auswertemittel liegt sowohl das stromproportionale Einprägesignal U(I), als auch das Messsignal U(U) dann in quantisierter und seriell zu übertragender digitaler Form als AD (U(U)) bzw. AD (U(I)) vor und wird in einer zugeordneten Mikrocontroller-Einheit 40 verarbeitet. Diese Microcontroller-Einheit erzeugt gleichzeitig in ansonsten bekannter Weise den Wechsel-Takt CLK für die primär- bzw. sekundärseitigen Kommutatoren 24, 32, welche, in den Figuren nicht gezeigt und in ansonsten bekannter Weise, mittels diskreter Halbleiter-Schalter (bzw. als in einen Halbleiterbaustein integrierte Kommutatortransistoren, ggf. mit zusätzlichen, integrierten Mitteln zur Kompensation der Ladungsinjektion sowie mit Verzögerungselementen für das Taktsignal, um transiente Kurzschlüsse beim Flankenwechsel zu vermeiden) realisiert sind. Die Microcontroller-Einheit errechnet dann entweder selbst aus dem Verhältnis von primärseitig eingeprägtem Strom und sekundärseitig gemessener Spannung (unter Berücksichtigung der Zellkonstante sowie zusätzlich von notwendigen Kalibrierkonstanten, eingeschlossen einem Offset für Strom, Spannung bzw. Leitfähigkeit) den Wert der elektrischen Leitfähigkeit oder stellt alternativ die quantisierten Einzelgrößen zur externen Weiterverarbeitung über jeweils geeignet gewählte Protokolle bereit.

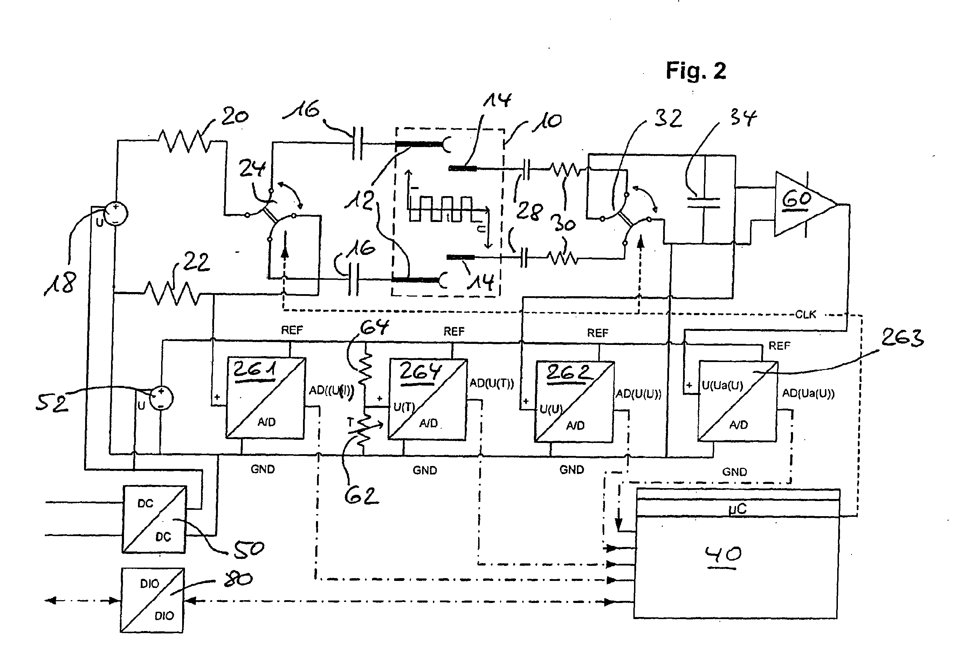

Das analog zur Fig. 1 gestaltete Schema-Schaltbild der Fig. 2 verdeutlicht zusätzliche, in der praktischen Realisierung nützliche Komponenten des beschriebenen Ausführungsbeispiels, wobei gleiche Bezugszeichen identische Funktionskomponenten bzw. Funktionalitäten beschreiben. Diese Anordnung, mit Ausnahme der Messzelle 10 und einer dieser zugeordneten Temperatursensorik (mit Bezugszeichen 62, 64 symbolisiert) ist, mit entsprechend kurzen Kabel-Verbindungslängen und kleinen parasitären Kapazitäten, integriert in einen Körper einer Quaderform 18mm x 47mm x 10mm, realisiert mithin eine vorteilhaft kleine, kompakte Baugröße. Es zeigt das Blockschaltbild der Fig. 2 Details der in der Fig. 1 lediglich schematisch angedeuteten A/D-Wandleranordnung als Mehrzahl von Wandlern; eine erste 16 Bit-Wandlereinheit 261 mit integrierter, auf eine Netzfrequenz einer Versorgungsspannungseinheit 50 (genauer: Einer DC-DC-Umsetzereinheit mit galvanischer Trennung; in einer praktischen Realisierung von einer übergeordneten Speiseeinheit mit 5V Gleichspannung gespeist, wobei dann z.B. der Spannungsquelle 18 eine ungeregelte Versorgungsspannung von ca. 10V DC anliegt) abgestimmter digitaler Filtereinheit (nicht im Detail gezeigt) empfängt das über dem Widerstand 22 abfallende, Einprägungsstrom - proportionale Spannungssignal U(I) und setzt dieses in ein mit einer Referenzspannung REF von 2,7 V quantifiziertes 16 Bit-Signal AD

((U)I) für die Mikrocontroller-Einheit 40 um. Die Referenzspannung REF wird aus einer Referenzspannungseinheit 52 erzeugt, welche wiederum von der Einheit 50 versorgt wird (wie i.ü. auch die Konstantspannungseinheit 18).

Gleichermaßen erzeugt eine zweite A/D-Wandlereinheit 262 (welche dieselbe Versorgungs- sowie Referenzspannung REF wie die Einheit 261 empfängt) aus dem über dem Messkondensator 34 abfallenden Messspannungssignal U(U) das 16 Bit-quantifizierte und serielle Messsignal AD (U(U)), wiederum bereitgestellt an die Mikrocontroller-Einheit 40.

Als Variation und Ergänzung zur generischen Realisierung der Fig. 1 zeigt das Ausführungsbeispiel der Fig. 2 zusätzlich, wie das Messspannungssignal U(U) als Kondensatorspannung zusätzlich am Eingang einer Messverstärkereinheit 60 anliegt, voreingestellt ist ein Verstärkungsfaktor im Ausführungsbeispiel von 21 (gegenüber der unverstärkten Kondensatorspannung U(U). Dieses verstärkte Signal Ua(U) wird, analog zur Quantisierung des unverstärkten Messsignals sowie des Einprägungsstrom-Signals, von einer dritten A/D-Wandlereinheit 263, wiederum Auflösung 16 Bit und serielle Ausgabe als AD (Ua(U)) zur Mikrocontroller-Einheit 40, verarbeitet, mit der Wirkung, dass gemäß Fig. 2 die Messspannung über der Kapazität 34 zweifach parallel, nämlich einerseits als unverstärktes Signal, andererseits als durch die Verstärkereinheit 60 im Pegel angehoben, zur Verarbeitung durch die Mikrocontroller-Einheit 40 anliegt.

Wiederum in Ergänzung zum generischen Prinzip der Fig. 1 zeigt die Fig. 2 noch einen vierten 16 Bit A/D-Wandler 264, welcher ein von einem Temperatursensor T abgegriffenes Temperatursignal in ein entsprechendes serielldigitalisiertes Temperatursignal AD (U(T)) umsetzt. Dieses analoge Temperatursignal U(T), welches lediglich aus Gründen der schematischen Vereinfachung als über einem temperaturveränderlichen Widerstand 62 relativ zu einem Referenzwiderstand 64 abfallendes, temperaturproportionales Spannungssignal gezeigt ist, verdeutlicht eine Temperaturerfassung des in der Messzelle 10 enthaltenen wässrigen Mediums, wobei entweder der Temperatursensor 62, geeignet wärmeübertragend, an der Messzelle befestigt ist oder aber in diese zum Erfassen einer aktuellen Fluidtemperatur hineinragt. Die Darstellung verdeutlich zudem, dass auch die gezeigte Temperaturmessung (wie auch die Leitfähigkeitsmessung) unabhängig von einer Versorgungs- bzw. Referenzspannung der parallel versorgten A/D-Wandlereinheiten 26i ist: Bei der gezeigten Temperaturmessung hängt nämlich der digitalisierte Wert auch nur vom Verhältnis der Widerstände 62, 64 ab, nicht jedoch von der Referenzspannung REF, da der Spannungsteiler 62/64 und der AD/Wandler 264 zwischen derselben Spannung vorgesehen ist.

Die Mikrocontroller-Einheit 40 stellt dann die so gewonnenen digitalisierten Signale der Wandler 261 bis 264 zur Ausgabe über einen Schnittstellenbaustein 80 zur Optoentkopplung der digitalen Signale (Takt, Digital-In/Out = DIO, wobei neben der DC/DC-Wandlereinheit 50 dieser Baustein 80 eine Hauptquelle einer parasitären Kopplung über die Potenzialbarriere darstellt, in Summe ca. 5pF) bereit, wobei entweder die Mikrocontroller-Einheit 40 eine Signalverarbeitung vorgenommen hat, oder aber lediglich, entsprechend einem gewünschten Übertragungsprotokoll, dann durch die Einheit 80 die gewonnenen Signale zur weiteren Behandlung bereitstehen.

In der Fig. 2 nicht gezeigt ist eine mögliche galvanische Entkopplung der Versorgungseinheit 50 von den primär- bzw. sekundärseitigen Messkreisen und der zugehörigen A/D-Wandlung.

In der konkreten Realisierung, Aufbau der Messzelle etwa gemäß der DE 199 46 315, Zellkonstante 0,35/cm, würde die gezeigte Vorrichtung bei einer Taktfrequenz des Kommutator-Wechsels von 10 kHz (eine solche Taktfrequenz im Bereich zwischen ca. 1 und ca. 100 kHz hat sich als günstig erwiesen, um einerseits zur Verminderung nachteiligen Spannungsabfalls an den Elektroden hinreichend schnell zu sein, andererseits hinreichend niederfrequent zur Verminderung nachteiliger Schalteffekte) wird dann mit einer typischen Wiederhol- bzw. Abfragerate der A/D-Wandlung durch die Einheiten 261 - 264 von 0,1 Sekunden kombiniert (eine typische Wandlungszeit von ca. 80 ms, nach dieser Zeit steht ein jeweiliger Messwert zur Verfügung; mit einer Taktrate von 30 kHz wird das Digitalsignal aus dem Wandler über die serielle Schnittstelle ausgetaktet), für ein annähernd synchrones Erfassen der Daten. Da zudem, wie im Rahmen der Erfindung als vorteilhaft erläutert, sämtliche Wandler 261 - 264 mit derselben Versorgungs- sowie Referenzspannung betrieben werden, wirken sich Störeinflüsse nicht auf das Messergebnis aus. Eine typische Gesamt-Leistungsaufnahme der Schaltung liegt im Bereich von < 250 mW, so dass, wie diskutiert, geringe Koppelkapazitäten für eine galvanische Entkopplung ausreichen.

Eine Leitfähigkeit sigma des im Behälter 10 enthaltenen Fluids würde nunmehr wie folgt bestimmt werden:

$$(1.1) \qquad sigma = \left( \frac{AD(U(I)) - AD_{IO}}{AD(U(U)) - AD_{UO}} \bullet \frac{1}{R_{mess}} \right) - sigma_0$$

$$(1.2) \qquad sigma = \left( \frac{AD(U(I)) - AD_{IO}}{AD(U(U)) - AD_{UO}} \bullet \frac{21}{R_{mess}} \right) - sigma_0$$

wobei, gemäß Formel 1.1 und keiner Verstärkung des Kondensatorsignals, ein großer Messbereich abdeckbar ist, während, insbesondere im Bereich kleiner Leitfähigkeiten, dann als verstärktes Signal (Faktor 21) gemäß Formel 1.2, der Datenstrom AD (Ua(U)) zur Verfügung steht.

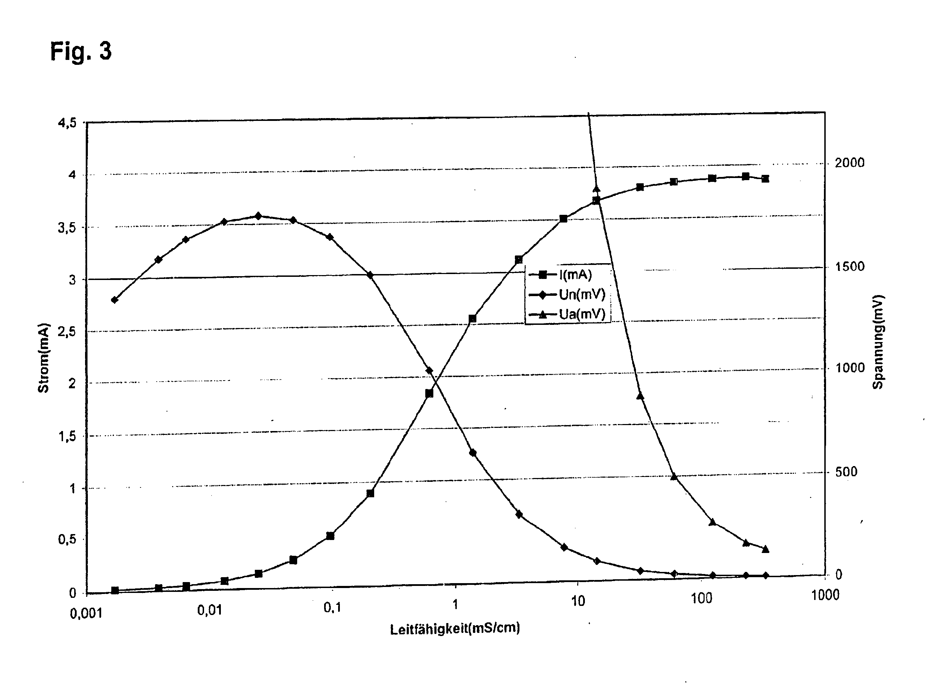

In den Formeln bedeuten dabei $AD_{IO}$ (als Offset für die Strommessung), $AD_{U0}$ (als Offset für die ausgangsseitige Spannungsmessung), $sigma_0$ (als Offset für die Leitfähigkeit, etwa zur Berücksichtigung von Kabel- und Verlegungseffekten) Kalibrierkonstanten, welche geeignet eingestellt bzw. gewählt werden, und in der bereits geschriebenen Weise bedeutet k die Zellkonstante und berücksichtigt mithin die Geometrie der Messzelle. Da im Rahmen der Erfindung die Zellkonstante k gut über die Messzellengeometrie definiert ist, kann diese über geeignete Prozesssteuerung (als mechanische Genauigkeit) reproduzierbar definiert werden. Zur Bestimmung der Konstanten $AD_{U0}$ sowie $sigma_0$ wird ein

offener Zustand (d.h. Luft, also ungefüllte Messzelle) herbeigeführt, während etwa durch ein Kurzschließen der Elektroden der Offset $AD_{I0}$ bestimmbar ist. Entsprechend entfällt die (traditionell problematische) Handhabung von flüssigen Leitfähigkeits-Standardmedien für eine Kalibration. Da zudem sigma$_0$ im Wesentlichen eine scheinbare Leitfähigkeit durch zu den Elektroden 14 parallel parasitäre Kapazitäten beschreibt (siehe hierzu auch die Spannungsabnahme im Bereich zwischen 0 µS/cm und 20 µS/cm in Fig. 3) ist im praktischen Gebrauch diese Leitfähigkeit auf ca. sigma$_0$ = 2,5 µS/cm reduziert.

Ein konkretes Signalverhalten- dieser Schaltung, insbesondere einen Verlauf des (einprägungsseitigen) Stroms sowie, damit zusammenhängend, Verläufe der messseitigen Messspannungen (verstärkt als Ua bzw. unverstärkt als Un) verdeutlichen die Signalverläufe der Fig. 3. Es zeigt sich, dass über einen sehr weiten Bereich der Leitfähigkeiten, von ca. 2 µS/cm bis zu ca. 200 mS/cm, der einprägungsseitige Strom zwischen ca. 0,01 und ca. 3,8 mA variiert, während messseitig unverstärkte Spannungen zwischen ca. 10 mV und ca. 1700 mV existieren; gerade der Bereich hoher Leitfähigkeiten macht die Nutzung des verstärkten Spannungssignals nützlich, da hier, bei entsprechend geringen einprägungsseitigen Stromflüssen, ein unverstärktes Spannungs-Messsignal keine hinreichende Auflösung mehr erbringt. Tatsächlich bleibt bis zu etwa 200 mS/cm die Auflösung besser als 0,6% des Messwertes, so dass bis zu diesem Wert prinzipiell auf den verstärkten Zweig verzichtet werden kann.

In der praktischen Realisierung bedeutet dieses Verhalten, dass sowohl im linksseitigen Bereich der Fig. 3, bei kleinen spezifischen Leitfähigkeiten, als auch im rechtsseitigen Bereich großer Leitfähigkeiten, jeweils gute Auflösungen erreicht werden, wobei nur an den Messbereichsgrenzen, d.h. bei 2 µS/cm bzw. 200 mS/cm (bezogen auf den unverstärkten Zweig) die Auflösung den beschriebenen Bereich von 0,6% erreicht, dazwischen jedoch für viele Messaufgaben bereits völlig ausreichend ist und damit im Regelfall den im Ausführungsbeispiel zusätzlichen gezeigten verstärkten Zweig nicht erfordert.

## Patentansprüche

1. Vorrichtung zur Messung der elektrischen Leitfähigkeit eines flüssigen, insbesondere wässrigen Mediums mit Konstantspannungsmitteln (18), die mit einer ersten Elektrodenanordnung (12) verbunden und zum Einprägen eines Wechselsignals in das flüssige Medium ausgebildet und beschaltet sind, und mit Erfassungsmitteln (34), die mit einer zweiten, von der ersten Elektrodenanordnung getrennten und über das flüssige Medium insbesondere in der Art einer Vierpol-Konfiguration verkoppelten Elektrodenanordnung (14), insbesondere Elektrodenpaar, verbunden sind und eingerichtet sind, mit einer Taktfrequenz (CLK) des Wechselsignals ein von der elektrischen Leitfähigkeit beeinflusstes Messsignal zu erzeugen, und Auswertemitteln (26, 40), die eingerichtet sind, aus einem stromproportionalen Einprägesignal (U(i)) des durch die erste Elektrodenanordnung in das flüssige Medium eingeprägten Stroms und dem Messsignal (U(U)) ein Ausgangssignal, insbesondere ein Leitfähigkeitssignal des flüssigen Mediums, zu erzeugen und zur elektronischen Weiterverarbeitung bereitzustellen,
**dadurch gekennzeichnet, dass**
die Konstantspannungsmittel in einem einzelnen, Kommutatormittel (24) für die erste Elektrodenanordnung sowie ohmsche Widerstandsmittel (20 ,22) in Reihenschaltung aufweisenden Schaltungszweig ausgebildet sind, wobei die Vorrichtung eingerichtet ist, das stromproportionale Einprägesignal (U(I) als Spannungsabfall über den Widerstandsmitteln, insbesondere über einem Teilwiderstand (22) der Widerstandsmittel, abzugreifen.

2. Vorrichtung nach Anspruch 1, **dadurch gekennzeichnet, dass** den Widerstandsmitteln eine gesonderte, nicht in die Auswertemittel integrierte erste Analog-Digital-Wandlereinheit (261) zum Erzeugen des digitalen stromproportionalen Einprägesignals (AD(U(I))) zugeordnet ist.

3. Vorrichtung nach Anspruch 1 oder 2, **dadurch gekennzeichnet, dass** mit der zweiten Elektrodenanordnung zusammenwirkenden Kapazitätsmitteln eine gesonderte, nicht in die Auswertemittel integrierte zweite Analog-Digital-Wandlereinheit (262) zum Erzeugen des digitalen Messsignals AD(U(U)) zugeordnet ist.

4. Vorrichtung nach Anspruch 2 oder 3, **dadurch gekennzeichnet, dass** die erste und/oder die zweite Analog-Digital-Wandlereinheit ein serielles Ausgangssignal für die Auswertemittel (40) erzeugt und mit diesen über eine serielle Verbindungsleitung, insbesondere über eine jeder der ersten und zweiten Analog-Digital-Wandlereinheiten einzeln zugeordnete serielle Verbindungsleitung, zusammenwirkt.

5. Vorrichtung nach einem der Ansprüche 2 bis 4, **dadurch gekennzeichnet, dass** die erste und/oder die zweite Analog-Digital-Wandlereinheit bevorzugt integrierte Filtermittel aufweist, die auf die Taktfrequenz des Wechsel- und/oder eines Versorgungsspannungssignals abgestimmt sind.

6. Vorrichtung nach Anspruch 1, 2, 4 und 5, **dadurch gekennzeichnet, dass** der ersten und der zweiten Analog-Digital-Wandlereinheit eine gemeinsame Versorgungsspannungseinheit (50) zugeordnet ist, die bevorzugt zusätzlich als Versorgungsspannungseinheit für die Konstantspannungsmittel (18) dient und/oder in diese integriert ist und/oder die erste und die zweite Analog-Digital-Wandlereinheit eine gemeinsame Referenzspannungsquelle für eine Wandlerquantisierung aufweist.

7. Vorrichtung nach einem der Ansprüche 1 bis 6, **dadurch gekennzeichnet, dass** die Konstantspannungsmittel (18) eine analoge Regeleinheit aufweisen und/oder ohne integrierte digitale Schaltungsbaugruppen realisiert sind.

8. Vorrichtung nach einem der Ansprüche 1 bis 7, **gekennzeichnet durch** zum Zusammenwirken mit dem flüssigen Medium ausgebildete Temperaturerfassungsmittel (62), die über eine zugeordnete dritte Analog-Digital-Wandlereinheit (264) mit den Auswertemitteln so zusammenwirken, dass eine Mediumstemperatur das Leitfähigkeitssignal beeinflusst.

9. Vorrichtung nach einem der Ansprüche 1 bis 8, **dadurch gekennzeichnet, dass** der einzelne Schaltungszweig so ausgebildet ist, dass die ohmschen Widerstandsmittel unveränderlich, insbesondere mit ihrem ohmschen Widerstandswert konstant, hysteresefrei und nicht diskret umschalt- oder auswählbar, eingerichtet sind, und/oder keine den ohmschen Widerstandswert beeinflussende aktive und/oder Schaltelemente im Schaltungszweig vorgesehen sind.

10. Vorrichtung nach einem der Ansprüche 1 bis 9, **dadurch gekennzeichnet, dass** die Erfassungsmittel Kondensatormittel (34) aufweisen, deren Kondensatorspannung das kontinuierlich und/oder unabhängig von der Taktfrequenz des Wechselsignals erzeugte digitale Messsignal bestimmt.

11. Vorrichtung nach einem der Ansprüche 1 bis 10, **dadurch gekennzeichnet, dass** das Messsignal (U(U)) parallel und synchron an einem ersten und einem zweiten Eingang der Erfassungsmittel mit zueinander unterschiedlich stark verstärkten Signalpegeln anliegt.

12. Vorrichtung nach einem der Ansprüche 1 bis 11, **dadurch gekennzeichnet, dass** eine Wiederhol- und/oder Zyklusfrequenz der Erzeugung des digitalen stromproportionalen Einprägesignals und/oder des digitalen Messsignals zur Taktfrequenz des Wechselsignals in einem Verhältnis kleiner 1:100, insbesondere kleiner 1:500, eingerichtet ist.

13. Vorrichtung nach einem der Ansprüche 1 bis 12, **gekennzeichnet durch**
Entkopplungsmittel, insbesondere ohmsche Widerstandsmittel (30), zwischen jeweiligen Elektroden (14) der zweiten Elektrodenanordnung und diesen nachgeschaltete Kommutatormitteln (32).

14. Verwendung der Vorrichtung nach einem der Ansprüche 1 bis 13 zur Leitfähigkeitsmessung einer Flüssigkeit, insbesondere von Wasser, wobei das Leitfähigkeitssignal einew ununterbrochenen Bereich der Leitfähigkeit zwischen 0,001 mS/cm und 850mS/cm, insbesondere zwischen 0,001 mS/cm und 1000mS/cm überstreicht.

## Claims

1. A device for measuring the electrical conductivity of a liquid medium, especially an aqueous medium with constant voltage means (18) which are connected to a first electrode arrangement (12) and which are made and wired for injecting an alternating signal into the liquid medium, and with detection means (34) which are connected to second electrode arrangement (14), especially an electrode pair, which is separated from the first electrode arrangement and which is coupled via the liquid medium especially in the manner of a four-pole configuration, and which is made to generate a measurement signal which is influenced by the electrical conductivity with a clock frequency (CLK) of the alternating signal, and
evaluation means (26, 40) which are made to from a current-proportional injection signal (U(i)) of the current injected by the first electrode arrangement into the liquid medium and from the measurement signal (U(U)) generate an output signal, especially a conductivity signal of the liquid medium and make it available for further electronic processing,
**characterized in that**
the constant voltage means are made in an individual circuit branch which has commutator means (24) for the first electrode arrangement and ohmic resistance means (20, 22) in a series connection,
the current-proportional injection signal (U(I) being tapped as a voltage drop over the resistance means, especially over a partial resistor (22) of the resistance means.

2. The device as claimed in Claim 1, wherein a separate first analog-digital converter unit (261) for generating the digital current-proportional injection signal (AD(U(I))) which is not integrated into the evaluation means is assigned to the resistance means.

3. The device as claimed in Claim 1 or 2, wherein a separate second analog-digital converter unit (262) for generating the digital measurement signal AD(U(U)) which is not integrated into the evaluation means is assigned to the capacitance means which interact with the second electrode arrangement.

4. The device as claimed in Claim 2 or 3, wherein the first and/or the second analog-digital converter unit generates a serial output signal for the evaluation means (40) and interacts with them via a serial connecting line, especially via a serial connecting line which is assigned individually to each of the first and second analog-digital converter units.

5. The device as claimed in one of Claims 2 to 4, wherein the first and/or the second analog-digital converter unit has preferably integrated filter means which are tuned to the clock frequency of the alternating signals and/or of a supply voltage signal.

6. The device as claimed in Claim 1, 2, 4, and 5, wherein a common voltage supply unit (50) is assigned to the first and/or the second analog-digital converter unit and is used preferably in addition as a supply voltage unit for the constant voltage means (18) and/or is integrated into them and/or the first and/or the second analog-digital converter unit has a common reference voltage source for converter quantization.

7. The device as claimed in one of Claims 1 to 6, wherein the constant voltage means (18) have an analog control unit and/or are implemented without integrated digital circuit modules.

8. The device as claimed in one of Claims 1 to 7, **characterized by** temperature detection means (62) which are made for interaction with the liquid medium and which interact with the evaluation means via an assigned third analog-digital converter unit (264) such that the temperature of a medium influences the conductivity signal.

9. The device as claimed in one of Claims 1 to 8, wherein the individual circuit branch is made such that the ohmic resistance means are set up to be invariable, especially constant with their ohmic resistance value, free of hysteresis and not able to be discretely switched over or selected,
and/or there are not active and/or switching elements in the circuit branch which influence the ohmic resistance value.

10. The device as claimed in one of Claims 1 to 9, wherein the detection means have capacitor means (34) whose capacitor voltage determines the digital measurement signal which is generated continuously and/or independently of the clock frequency of the alternating signal.

11. The device as claimed in one of Claims 1 to 10, wherein the measurement signal (U(U)) is present parallel and synchronously on a first and a second input of the detection means with signal levels which have been amplified to different degrees from one another.

12. The device as claimed in one of Claims 1 to 11, wherein a repetition frequency and/or cycle frequency of the generation of the digital current-proportional injection signal and/or of the digital measurement signal is set up to the clock frequency of the alternating signal in a ratio of less than 1:100, especially less than 1:500.

13. The device as claimed in one of Claims 1 to 12, **characterized by** decoupling means, especially ohmic resistance means (30), between respective electrodes (14) of the second electrode arrangement and commutator means (32) which are connected downstream of them.

14. A use of the device as claimed in one of Claims 1 to 13 for conductivity measurement of a liquid, especially of water, wherein the conductivity signal has an uninterrupted range of conductivity between 0.001 mS/cm and 850 mS/cm, especially between 0.001 mS/cm and 1000 mS/cm.

**Revendications**

1. Dispositif pour mesurer la conductibilité électrique d'un milieu liquide, en particulier aqueux avec des moyens à tension constante (18) qui sont reliés à un premier système d'électrodes (12) et sont constitués et câblés pour appliquer un signal alternatif dans le milieu liquide et avec des moyens de saisie (34) qui sont reliés et arrangés avec un deuxième système d'électrodes (14), en particulier une paire d'électrodes, séparé du premier système d'électrodes et couplé par le milieu liquide en particulier sous la forme d'une configuration quadripolaire et pour générer avec une fréquence de rythme (horloge) du signal alternatif, un signal de mesure influencé par la conductibilité électrique et

   des moyens d'évaluation (26, 40) qui sont arrangés pour produire à partir d'un signal d'application proportionnel au courant (U(i)) du courant rappliqué dans le milieu liquide par le premier système d'électrodes et du signal de mesure (U(U)), un signal initial, en particulier un signal de conductibilité du milieu liquide et le mettre à disposition pour traitement électronique ultérieur,

   **caractérisé en ce que**

   les moyens à tension constante sont constitués en une branche de circuit individuelle présentant des moyens de commutation (24) pour le premier système d'électrodes ainsi que des moyens de résistance (20, 22) ohmiques connectés en série,

   le dispositif étant organisé pour prélever le signal d'application (U(I)) proportionnel au courant en tant que chute de tension par les moyens de résistance, en particulier par une résistance partielle (22) des moyens de résistance.

2. Dispositif selon la revendication 1 **caractérisé en ce qu'**aux moyens de résistance est affecté un premier convertisseur analogique-numérique (261) spécial non intégré dans les moyens d'évaluation pour produire le signal d'application (AD(U(I))) numérique proportionnel au courant.

3. Dispositif selon la revendication 1 ou 2 **caractérisé en ce qu'**un deuxième convertisseur analogique-numérique (262) spécial, non intégré dans les moyens d'évaluation est affecté avec les moyens de capacité coopérant avec le deuxième système d'électrodes pour produire le signal de mesure numérique AD(U(U)).

4. Dispositif selon la revendication 2 ou 3 **caractérisé en ce que** le premier et/ou le deuxième convertisseur analogique-numérique produit un signal initial de série pour les moyens d'exploitation (40) et coopère avec celui-ci par une ligne de liaison de série, en particulier par une ligne de liaison de série individuellement attribuée à chacun des premiers et deuxièmes convertisseurs analogiques-numériques.

5. Dispositif selon une quelconque des revendications 2 à 4 **caractérisé en ce que** le premier et/ou deuxième convertisseur analogique-numérique présente de préférence des moyens de filtrage intégrés qui sont accordés sur la fréquence de rythme du signal de tension alternative et/ou d'un signal de tension d'alimentation.

6. Dispositif selon la revendication 1, 2, 4 et 5 **caractérisé en ce qu'**au premier et au deuxième convertisseur analogique-numérique est affecté un système de tension d'alimentation commun (50) qui sert de préférence en plus de système de tension d'alimentation pour les moyens à tension constante (18) et/ou est intégré dans ceux-ci et/ou le premier et lie deuxième convertisseur analogique-numérique présente une source de tension de référence commune pour une quantification de convertisseur.

7. Dispositif selon une quelconque des revendications 1 à 6 **caractérisé en ce que** les moyens de tension constante (18) présentent un système de régulation anagogique et/ou sont réalisés sans ensembles de commutation numériques intégrés.

8. Dispositif selon une quelconque des revendications 1 à 7 **caractérisé par** des moyens de saisie de température (62) pour l'action conjointe avec le milieu liquide qui agissent conjointement avec les moyens d'évaluation par un troisième convertisseur analogique-numérique (264) attribué de telle sorte qu'une température du milieu influence le signal de conductibilité.

9. Dispositif selon une quelconque des revendications 1 à 8 **caractérisé en ce que** la branche de circuit individuelle est constituée de telle sorte que les moyens de résistance ohmiques sont organisés stables, en particulier constants avec leur valeur de résistance ohmique, sans hystérèse et commutables ou sélectionnables et/ou aucun élément de commutation et/ou actif dans la branche de circuit influençant la valeur de résistance ohmique n'est prévu.

10. Dispositif selon une quelconque des revendications 1 à 9 **caractérisé en ce que** les moyes de saisie présentent des moyens de condensateur (34) dont la tension de condensateur détermine le signal de mesure numérique généré en continu et/ou indépendamment de la fréquence de rythme du signal alternatif.

**11.** Dispositif selon une quelconque des revendications 1 à 10 **caractérisé en ce que** le signal de mesure (U(U))est présent de façon parallèle et synchrone à une première et une deuxième entrée des moyens de saisie avec des niveaux de signal fortement amplifiés de façon différente entre eux.

**12.** Dispositif selon une quelconque des revendications 1 à 11 **caractérisé en ce qu'**une fréquence de répétition et/ou de cycle de la production du signal d'application numérique proportionnel au courant et/ou du signal de mesure numérique pour la fréquence de rythme du signal alternatif est organisée dans un rapport inférieur à 1:100, en particulier inférieur à 1:500.

**13.** Dispositif selon une quelconque des revendications 1 à 12 **caractérisé par** des moyens de découplage, en particulier des moyens de résistance (30) ohmiques, entre les électrodes (14) respectives du deuxième système d'électrodes et ces moyens de commutation (32) connectés en aval.

**14.** Utilisation du dispositif selon une quelconque des revendications 1 à 13 pour la mesure de conductibilité d'un liquide, en particulier de l'eau, pour lequel le signal de conductibilité couvre une zone interrompue de conductibilité entre 0,001 ms/cm et 850 ms/cm, en particulier entre 0,001 ms/cm et 1000 mS/cm.

**Fig. 1**

EP 2 567 223 B1

Fig. 2

Fig. 3

EP 2 567 223 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008025775 A
- DE 19946315